# EUROPÄISCHE PATENTSCHRIFT

(11) **EP 0 623 449 B1**
(45) Veröffentlichungstag und Bekanntmachung des Hinweises auf die Patenterteilung: **01.07.1998**
(21) Anmeldenummer: 94105840.6
(22) Anmeldetag: 15.04.1994
(51) Int. Cl.: B29C 51/26

(54) **Spannrahmen für Tiefziehmaschinen**
Clamping frame for deep-drawing machine
Cadre de fixation pour une machine d'emboutissage

(30) Priorität: 04.05.1993 DE 4314641
(43) Veröffentlichungstag der Anmeldung: 09.11.1994
(73) Patentinhaber: Georg Geiss Maschinenfabrik, 96145 Sesslach (DE)
(72) Erfinder: Geiss, Manfred, Dipl.-Ing., D-96145 Sesslach (DE)
(74) Vertreter: Weise, Reinhard, Dipl.-Ing.

(56) Entgegenhaltungen:
- AT-A- 223 371
- DE-U- 8 515 381
- US-A- 3 599 959
- US-A- 5 167 969

## Beschreibung

Die Erfindung betrifft einen Spannrahmen für Tiefziehmaschinen, insbesondere Vakuumformmaschinen, gemäß dem Oberbegriff des Patentanspruchs 1.

Bei Tiefziehmaschinen, insbesondere Vakuumformmaschinen, ist es bekannt, verstellbare Spannrahmen einzusetzen, um in Abhängigkeit von den Abmessungen des späteren Fertigteils verschieden große Platten- bzw. Folienzuschnitte aus Kunststoff spannen und verarbeiten zu können. Dabei besteht der Spannrahmen aus einem starren Außen- oder Hauptrahmen und einem Innenrahmen, mit dem das eigentliche Spannen der Zuschnitte erfolgt. Die Längsleisten dieses Innenrahmens sind verschiebbar am Außenrahmen gelagert, während die Querleisten als fixe Leisten ausgebildet sind und durch ihre Länge die Breite des Innenrahmens bestimmen.

Zum Verstellen des Spannrahmens werden die fixen Querleisten herausgenommen, die verstellbaren Längsleisten verschoben und dann fixe Leisten des gewünschten neuen Formats eingesetzt. Die Verschiebung der Längsleisten kann motorisch erfolgen. Eine motorische Verstellung der Querleisten ist jedoch nicht möglich, da die Querleisten der bekannten Spannvorrichtung an den verschiebbaren Längsleisten befestigt sind.

Eine Verbesserung dieses bekannten Spannrahmens besteht darin, die Querleisten als Teleskopstücke innerhalb der starren Längsleisten auszubilden. Die Fixierung der beiden Leistenarten erfolgt mittels Schrauben. Um eine Änderung des Spannformats bei diesem bekannten Spannrahmen durchzuführen, müssen jedoch eine Vielzahl von Schrauben gelöst, die Innenrahmenteile von Hand verschoben und anschließend sämtliche Schrauben wieder festgeschraubt werden, wobei die Längsleisten bereits teilweise auch motorisch verstellbar sind. Das Verstellen von Hand ist nicht nur mühsam und zeitraubend, sondern schon wegen der hohen Temperaturen im Bereich des Spannrahmens nicht ungefährlich. Meist muß erst abgewartet werden, bis die Temperaturen auf ein erträgliches Maß abgesunken sind, um die Spannrahmeneinstellung vornehmen zu können. Dies bedeutet eine Verzögerung im Arbeitszyklus der Maschine, was zu einer entsprechenden Verteuerung in der Herstellung der verschiedenen Fertigteile führt.

Ein Spannrahmen der eingangs genannten Art ist bereits in der DE-U-85 15381 offenbart. Bei diesem vorbekannten Spannrahmen setzen sich die Längsleiste und die Querleiste jeweils aus drei Profilteilen zusammen. Die Querleiste weist ein mittiges ununterbrochenes Hohlprofil auf, das oben und unten mit einer Stegleiste versehen ist und im Eckbereich des Innenrahmens durch eine beabstandete Anordnung von Holmen tritt, die sich ununterbrochen ebenso wie das Profil an den gegenüberliegenden Seiten des Außenrahmens abstützen.

Nachteilig ist bei dieser vorbekannten Konzeption anzusehen, daß die Verstellspindelkonfiguration statisch un- bzw. überbestimmt ist. Es treten unerwünschte Verformungen an den Spindeln auf, da über die Spindel die Kräfte des Spannrahmens aufgebracht werden. Hinzu kommt ferner, daß jede Spindel mit einem eigenen Umkehrgetriebe ausgebildet ist und die Antriebe der einzelnen Getriebe nicht gekoppelt sind, so daß zwangsläufig beim Verstellen ein Klemmen eintreten wird. Auch das Vorsehen von angeflanschten Motoren an den Umkehrgetrieben für eine motorische Verstellung beeinträchtigt eindeutig die Verstellmöglichkeit des Innenrahmens. Als nachteilig ist weiterhin darauf hinzuweisen, daß eine manuelle Leistenanpassung zur Ergänzung der Rahmenleisten erforderlich ist, um zum Spannen einen umlaufenden ununterbrochenen Spannrahmen zu erreichen. Zudem liegen alle Bewegungseinrichtungen für den Innenrahmen in ungünstiger Weise wegen der vorgesehen Durchdringung der Leisten in einer einzigen Ebene, in der auch die Lagerung und die Umkehrgetriebe liegen. Hieraus ergibt sich ein besonders sperriger Aufbau, an dessen Funktion erhebliche Zweifel bestehen und der die Praxistauglichkeit derart beeinträchtigt, daß dieser vorbekannte Spannrahmen nie zu einem kommerziellen Einsatz kam. Hinzuweisen ist schließlich auch darauf, daß der vorbekannte Spannrahmen für die Lagerung von Längs- und Querleisten keine Gleitstücke oder Riegel aufweist. Außerdem müssen die vorgesehenen Spindel wegen der vorgesehenen Konzeption der Kraftübertragung von Kräften über den Innenrahmen auf den Außenrahmen über die Spindeln einen großen Durchmesser haben, um die Spannkräfte aufnehmen zu können, was nicht nur zur Sperrigkeit des vorbekannten Spannrahmens, sondern auch zur Verteuerung der Herstellung beiträgt.

Die US-A-5 167 969 zeigt zwar Spannrahmen mit einem Teleskopsystem. Diese Spannrahmen besitzen jedoch keine erforderliche umlaufende ununterbrochene Spannebene, da die Teleskopelemente notwendigerweise einen geringeren Querschnitt aufweisen müssen als die jeweils zugeordneten Einschubabschnitte des Teleskopsystems.

Der Erfindung liegt die Aufgabe zugrunde, einen Spannrahmen der eingangs genannten Gattung derart weiterzubilden, daß unterschiedliche Einstellungen des Spannrahmenformats exakt und jederzeit reproduzierbar schnell vorgenommen werden können.

Erfindungsgemäß wird diese Aufgabe durch die im Anspruch 1 gekennzeichneten Merkmale gelöst. Bevorzugte weitere Ausbildungen der Erfindung sind den nachgeordneten Patentansprüchen zu entnehmen.

Nach der Erfindung ist also der zum Spannen der Zuschnitte eingesetzte Innenrahmen sowohl in Quer- oder Breitenrichtung als auch in Längsrichtung unabhängig voneinander stufenlos motorisch verstellbar. D.h. der Innenrahmen läßt sich sowohl in der Breite als auch in der Länge stufenlos und unabhängig voneinander gleichzeitig motorisch verstellen und einstellen. Nach einem weiteren Merkmal der Erfindung besteht der Innenrahmen aus zwei in Querrichtung gleitend verschiebbar am Außenrahmen geführten Längsleisten und zwei in Längsrichtung verlagerbaren Querleisten, die jeweils eine Teleskopleiste aufweisen, die gleitend verschiebbar an einer gleitend verschiebbar am Außenrahmen gehaltenen Stütz- oder Druckleiste angehängt und abgestützt ist. Die beim Spannen auftretenden Kräfte und Belastungen der Querleisten werden also von den Druckleisten aufgenommen und auf den Außenrahmen übertragen.

Zur motorischen Verstellung der Längs- und der Querleisten des Innenrahmens sind jeweils zwei in den Endbereichen der Leisten angeordnete, in der Mitte ihrer Länge von links- auf rechtsgängig wechselnde Gewindespindeln vorgesehen. Die Gewindespindeln jedes Spindelpaares sind durch Kraftübertragungsmittel, wie Ketten od. dgl., synchron miteinander verbunden. Jeweils die eine Spindel jedes Spindelpaares ist motorisch angetrieben. D.h. die Verstellung der Längs- und Querleisten des Innenrahmens erfolgt durch jeweils unabhängig voneinander arbeitende Motoren, wobei diese Verstellmotoren als elektrisch betriebene Motoren ausgebildet sind. Nach einem weiteren zweckmäßigen Merkmal der Erfindung besteht jede Gewindespindel aus einem rechts- und einem linksgängigen Spindelteil, die in der Mitte miteinander gekuppelt sind. Die Gewindespindeln sind zweckmäßgerweise mit einem Trapezgewinde ausgestattet, so daß entsprechende Kräfte übertragen werden können. Weiterhin ist vorgesehen, daß die an den Druckleisten angeordneten Teleskopleisten aus jeweils wenigstens zwei verschiebbar miteinander verbundenen Leisten bestehen, die seitliche, in Nuten der Längsleisten gleitend eingreifende und durch Riegel an den Längsleisten gehaltene Fortsätze aufweisen. Des weiteren sind die Teleskopleisten durch Klemmstücke gleitend an den Druckleisten gehalten. Die Gewindespindeln der Längsleisten wirken mit diesen und die im rechten Winkel hierzu verlaufenden Gewindespindeln der Querleisten wirken mit deren Druckleisten zusammen. Bei einer Verstellung der Längsleisten durch die ihnen zugeordneten Gewindespindeln und Verstellmotor werden die Teleskopleisten auseinandergezogen oder zusammengefahren - je nachdem, ob eine Vergrößerung oder Verkleinerung der Breite des Innenrahmens bewirkt werden soll -, während unabhängig davon eine Verschiebung der Querleisten in Längsrichtung durch das die Druckleisten der Querleisten durchgreifende Gewindespindelpaar mit dem ihm zugeordneten Verstellmotor bewirkt wird. Beim erfindungsgemäßen Spannrahmen werden also alle Innenrahmenteile motorisch verstellt. Ein Lösen und wieder Festziehen von Schrauben od. dgl. vor bzw. nach dem Verstellen entfällt. Die Rüstzeiten werden erheblich reduziert. Zusätzlich kann ein Wegmeßsystem vorgesehen werden, mit dem die Rahmengröße programmiert und abgespeichert werden kann, so daß je nach Größe des herzustellenden Fertigteils und den entsprechenden Zuschnittgrößen der Kunststoffplatten die hierauf abgestimmten Rahmengrößen abgerufen und eingestellt werden können, wodurch eine automatisierte Fertigung möglich wird.

Die Erfindung wird nun anhand eines Ausführungsbeispiels im Zusammenhang mit der Zeichnung näher erläutert. Es zeigen:
- Fig. 1: eine Draufsicht auf den Spannrahmen in schematisierter Darstellung,
- Fig. 2: die Ansicht einer Querleiste gemäß Schnitt II-II in Fig. 1 in vergrößerter Darstellung,
- Fig. 3: die Ansicht einer Längsleiste gemäß Schnitt III-III in Fig. 1 und
- Fig. 4: eine vergrößerte Darstellung der Längsleiste im Bereich der gleitend mit ihr verbundenen Querleiste gemäß Einzelheit IV in Fig. 3.

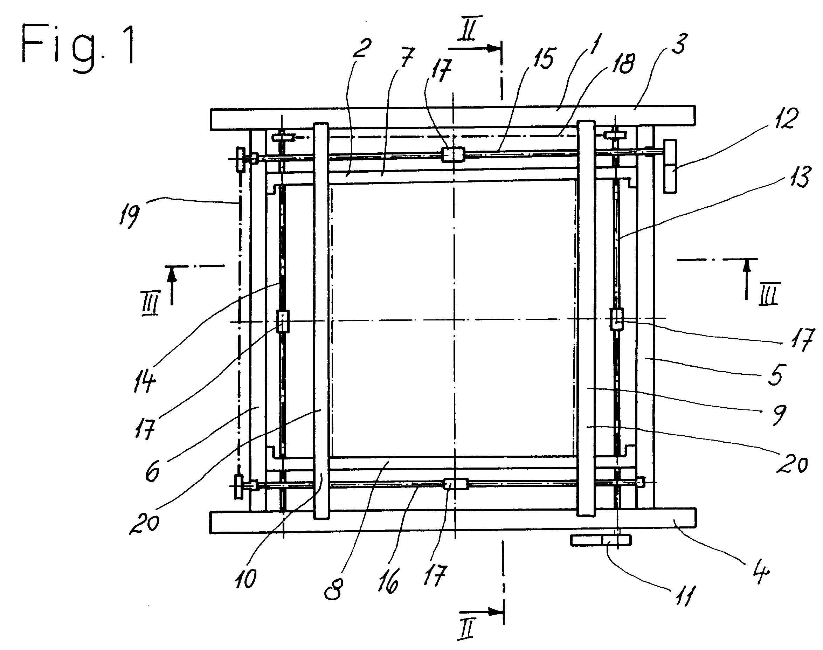

In Fig. 1 ist in schematischer Darstellung der obere Spannrahmen einer Vakuumformmaschine gezeigt. Der Spannrahmen besteht aus einem Haupt- oder Außenrahmen 1 und einem Innenrahmen 2, der vom Außenrahmen 1 gehalten ist. Der Außenrahmen 1 besteht aus den beiden parallel zueinander in Längsrichtung verlaufenden Rahmenteilen 3 und 4 und den beiden rechtwinklig hierzu und ebenfalls parallel zueinander in Quer- oder Breitenrichtung verlaufenden Querrahmenteilen 5 und 6, die fest mit den Längsrahmenteilen 3 und 4 verbunden sind, so daß ein starrer Außenrahmen 1 gebildet wird. Der Innenrahmen 2 besteht ebenfalls aus zwei in Längsrichtung verlaufenden Rahmenteilen 7 und 8, im folgenden als Längsleisten 7, 8 bezeichnet, und aus zwei Querrahmenteilen 9 und 10, im folgenden als Querleisten 9, 10 bezeichnet, wobei die Längsleisten 7, 8 und die rechtwinklig hierzu ausgerichteten Querleisten 9, 10 ebenfalls jeweils paarweise parallel zueinander verlaufen. Die Längs- und Querleisten 7, 8, 9 und 10 sind, wie weiter unten noch näher ausgeführt wird, gleitend verschiebbar am Außenrahmen 1 abgestutzt, so daß die Längsleisten 7, 8 in Querrichtung und die Querleisten 9, 10 in Längsrichtung verlagerbar sind. Die Verstellung und damit die Einstellung der Größe des zum Spannen der Kunststoffplatten-Zuschnitte herangezogenen Innenrahmens 2 erfolgt jeweils motorisch, wobei zur Verstellung der Längsleisten 7 und 8 der Verstellmotor 11 und zur Verstellung der Querleisten 9, 10 der Verstellmotor 12 vorgesehen ist, die als Elektromotore ausgebildet sind. Die Verstellbewegung wird jeweils über Spindeln 13, 14 und 15, 16 auf die Längs- bzw. Querleisten 7, 8 und 9, 10 übertragen, die als Gewindespindeln mit Trapezgewinde gestaltet und jeweils in den Endbereichen der Leisten 7 bis 10 angeordnet sind. Dabei ist das Gewindespindelpaar 13, 14 den Längsleisten 7, 8 und das Gewindespindelpaar 15, 16 den Querleisten 9, 10 zugeordnet. In der Mitte der Länge der Gewindespindeln 13 bis 16 wechselt die Gewindesteigung von rechts- auf linksgängig. Dabei besteht jede Gewindespindel 13 bis 16 aus jeweils einem rechts- und einem linksgängigen Spindelteil, die jeweils durch eine mittige Kupplung 17 miteinander verbunden sind. Beim Gewindespindelpaar 13, 14 wird die Gewindespindel 13 vom Verstellmotor 11 und beim Gewindespindelpaar 15, 16 die Gewindespindel 15 vom Verstellmotor 12 angetrieben. Die Verstellbewegung wird dabei von der angetriebenen Gewindespindel auf die andere Spindel des Spindelpaares durch Synchronketten 18 und 19 übertragen. Hierbei ist die Synchronkette 18 dem Gewindespindelpaar 13, 14 und die Synchronkette 19 dem Gewindespindelpaar 15, 16 zugeordnet.

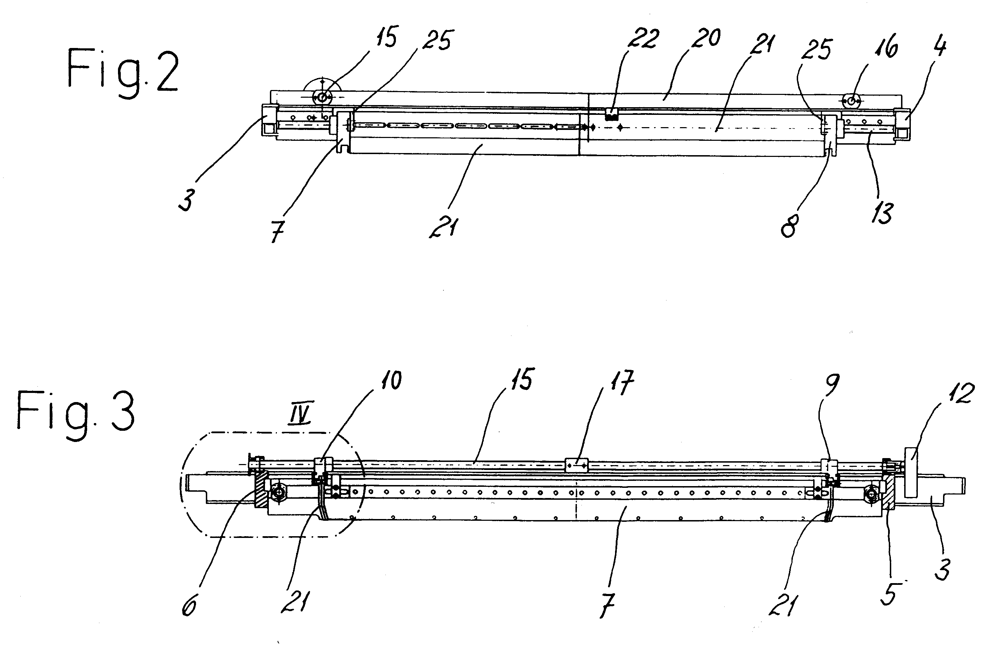

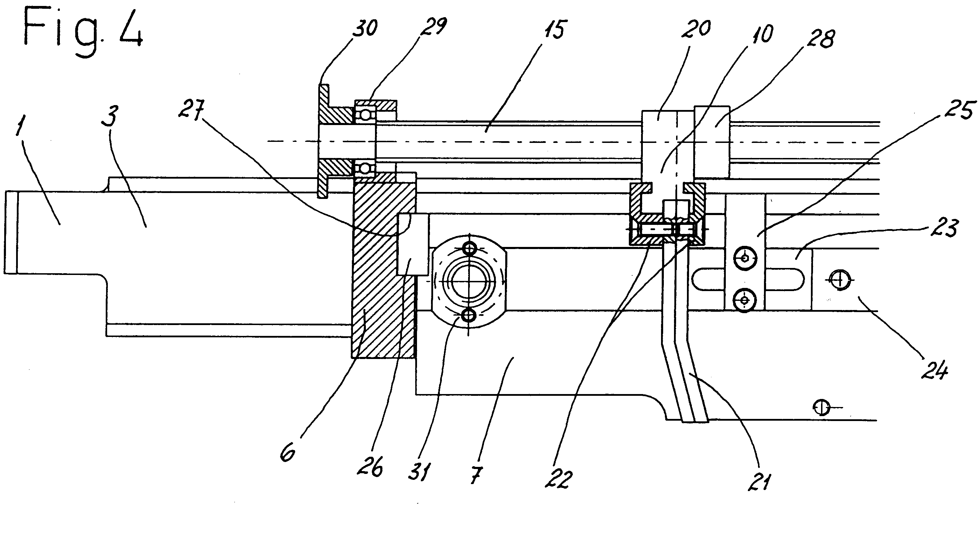

Wie insbesondere auch den Fig. 2 bis 4 zu entnehmen ist, setzen sich die Querleisten 9, 10 jeweils aus einer Stütz- oder Druckleiste 20 und einer aus wenigstens zwei Teleskopstücken bestehenden Teleskopleiste 21 zusammen. Die Druckleiste 20 ist gleitend verschiebbar an den Längsrahmenteilen 3 und 4 des Außenrahmens 1 abgestützt. An dieser Druckleiste 20 ist die Teleskopleiste 21 über Klemmstücke 22 gleitend gehalten. An den äußeren Enden der Teleskopstücke der Teleskopleiste 21 sind Fortsätze 23 angeordnet, die in Nuten 24 der Längsleisten 7, 8 über Riegel 25 gleitend gehalten sind. Die Längsleisten 7, 8 wiederum sind, wie bereits erwähnt, gleitend im Außenrahmen 1 gehalten, und zwar greifen, wie insbesondere in Fig. 4 zu erkennen ist, Gleitfortsätze 26 der Innenleisten 7, 8 in entsprechende nutförmige Aussparungen 27 der Querrahmenteile 5, 6 des Außenrahmens 1 ein. Die den Querleisten 9, 10 zugeordneten Gewindespindeln 15, 16 durchgreifen die Druckleisten 20 sowie an diesen befestigte Gewindemuttern 28. Die Enden der Gewindespindeln sind, wie bei der Gewindespindel 15 in Fig. 4 zu erkennen ist, in Wälzlagern 29 gelagert und am einen Ende der Gewindespindeln sind Kettenräder 30 für die Synchronketten 18 und 19 angeordnet. In Fig. 4 ist auch eine der an den Längsleisten 7, 8 angeordneten Gewindemuttern 31 zum Durchgriff der Gewindespindeln 13, 14 zu erkennen, die die Querverlagerung der Längsleisten 7 und 8 bewirken.

Bei einer Einstellung der Rahmengröße des Innenrahmens 2 wird mittels des Verstellmotors 11 und des Gewindespindelpaars 13, 14 eine Verschiebung der Längsleisten 7 und 8 in Breiten- bzw. Querrichtung bewirkt, wobei aufgrund der wechselnden Steigungsrichtung der Gewindespindeln 13 und 14 bei einer Verkleinerung der Rahmenbreite die Längsleisten 7 und 8 aufeinanderzu- bzw. bei einer Vergrößerung der Rahmenbreite die Längsleisten 7 und 8 voneinanderweg verlagert werden. Gleichzeitig werden über die Fortsätze 23 und Riegel 25 die Teleskopstücke der Teleskopleiste 21, die verschiebbar aneinanderliegen, von den Längsleisten 7 und 8 mitgenommen und entsprechend zusammengeschoben bzw. auseinandergezogen. Eine Vergrößerung bzw. Verkleinerung der Rahmenabmessung in Längsrichtung wird durch entsprechendes Verschieben der verschiebbar auf dem Außenrahmen 1 gelagerten Druckleisten 20 erreicht, die die verschiebbar an ihnen und den Längsleisten 7, 8 gehaltenen Teleskopleisten 21 mitnehmen, wobei die Verschiebebewegung der Druckleisten 20 über den Verstellmotor 12 und das Gewindespindelpaar 15, 16 bewirkt wird. Auch hier wird durch deren Wechsel in der Steigungsrichtung von links- auf rechtsgängig ab Spindelmitte erreicht, daß sich die Druckleisten 9, 10 aufeinanderzu - unter Verringerung ihres Abstandes voneinander - oder voneinander weg - unter Vergrößerung ihres gegenseitigen Abstandes - bewegen. Beide Verstellmotoren 11 und 12 können gleichzeitig betrieben werden, so daß eine schnelle Änderung der Spannrahmengröße erreichbar ist. Weiterhin kann ein (nicht weiter gezeigtes) Wegmeßsystem vorgesehen sein, mit dessen Hilfe eine vorprogrammierte Änderung der Rahmengröße erreicht werden kann, so daß eine weitgehend automatisierte Fertigung bei wechselnden Zuschnittgrößen des zu verarbeitenden platten- bzw. folienförmigen Kunststoffes möglich ist.

## Patentansprüche

1. Spannrahmen für Tiefziehmaschinen, insbesondere Vakuumformmaschinen, mit einem Außenrahmen (1) und einem von diesem gehaltenen und in seiner Größe stufenlos motorisch einstellbaren Innenrahmen (2) zum Spannen verschieden großer Kunststoffplatten- bzw. -folienzuschnitte, wobei der Innenrahmen (2) zwei Längsleisten (7, 8) und zwei Querleisten (9, 10) aufweist,
dadurch gekennzeichnet,
daß die Längsleisten (7, 8) über Gleitfortsätze (26) in nutförmigen Aussparungen (27) an einander gegenüber-liegenden Rahmenteilen (5, 6) des Außenrahmens (1) verschiebbar gelagert sind,
daß die Querleisten (9, 10) jeweils eine Druckleiste (20) und eine an der Druckleiste (20) über Klemmstücke (22) gleitend gehaltene Teleskopleiste (21) aufweisen,
daß die Teleskopleisten (21) über Riegel (25) in Nuten (24) der Längsleisten (7, 8) gleitend gehalten sind,
daß die Druckleisten (20) an einander gegenüberliegenden Längsrahmenteilen (3, 4) des Außenrahmens (1) gleitend verschiebbar sind, und
daß für die Längsleisten (7, 8) und die Querleisten (9, 10) jeweils zwei über jeweils eine Kette (18, 19) verbundene Spindelantriebe (17) mit jeweils rechts- und linksgängigen Spindelteilen (13 - 16) vorgesehen sind.

2. Spannrahmen nach Anspruch 1, dadurch gekennzeichnet, daß die Spindelteile in den Endbereichen der Längsleisten (7, 8) und der Querleisten (9, 10) angeordnet sind und jeweils ein Verstellmotor (11, 12) für ein Spindelteilpaar (13, 14; 15, 16) vorgesehen ist.

3. Spannrahmen nach Anspruch 1 oder 2, dadurch gekennzeichnet, daß die Spindelteile (15, 16) der Querleisten (9, 10) in Gewindemuttern (28) eingreifen, die an den Druckleisten (20) angeorndet sind.

4. Spannrahmen nach einem der vorangehenden Ansprüche, dadurch gekennzeichnet, daß die Spindelteile (13-16) ein Trapezgewinde aufweisen.

5. Spannrahmen nach einem der vorangehenden Ansprüche, dadurch gekennzeichnet, daß für die Einstellung der Rahmengröße des Innenrahmens (2) ein Wegmeßsystem und ein Datenspeicher zum Einstellen und Abrufen verschiedener Größen des Innenrahmens (2) vorgesehen sind.

## Claims

1. Clamping frame for deep-drawing machines, particularly vacuum moulding machines, comprising an outer frame (1) and an inner frame (2) for clamping plastic plate or film blanks of different sizes, which is held on said outer frame and designed for motor-controlled infinitely variable adjustment of its size, with said inner frame (2) including two longitudinal strips (7, 8) and two transverse strips (9, 10),
characterised in
that said longitudinal strips (7, 8) are supported, via sliding extensions (26), for sliding displacement in groove-shaped recesses (27) on frame elements (5, 6) of said outer frame (1), which are opposite each other,
that said transverse strips (9, 10) present each a pressing strip (20) and a telescopic strip (21) which is held, via clamping elements (22), on said pressing strip (20) for sliding displacement,
that said pressing strips (20) are designed for sliding displacement on opposite longitudinal frame elements (3, 4) of said outer frame (1), and
that two spindle drive mechanisms (17) with right-hand and left-hand thread spindle elements (13 to 16) each are provided for said longitudinal strips (7, 8) and said transverse strips (9, 10), which mechanisms are interconnected by a respective chain (18, 19).

2. Clamping frame according to Claim 1, characterised in that said spindle elements are arranged n the terminal regions of said longitudinal strips (7, 8) and said transverse strips (9, 10) and that one adjusting motor (11, 12) each is provided for a pair of spindle elements (13, 14; 15, 16).

3. Clamping frame according to Claim 1 or 2, characterised in that said spindle elements (15, 16) of said transverse strips (9, 10) are engaged in threaded nuts (28) disposed on said pressing strips (20).

4. Clamping frame according to any of the preceding Claims, characterised in that said spindle elements (13 to 16) present an acme screw-thread.

5. Clamping frame according to any of the preceding Claims, characterised in that for setting the frame size of said inner frame (2) a displacement-metering system and a data memory are provided for setting and calling in various sizes of said inner frame (2).

## Revendications

1. Cadre de fixation pour machines d'emboutissage, plus particulièrement des machines de moulage sous vide, pourvu d'un cadre externe (1) et d'un cadre interne (2) maintenu par celui-ci et dont la grandeur peut être réglée continuellement par moteur et qui est destiné à fixer des plaques respectivement des feuilles plastiques de grandeurs différentes, dans lequel le cadre interne (2) présente deux listeaux longitudinaux (7, 8) et deux listeaux transversaux (9, 10),
**caractérisé en ce que,**
les listeaux longitudinaux (7, 8) sont disposés de manière à pouvoir coulisser par l'intermédiaire de prolongements coulissants (26) dans des évidements (27) en forme de rainures sur les pièces d'encadrement (5, 6) opposées du cadre externe (1),
en ce que les listeaux transversaux (9, 10) présentent un listeau de pression (20) et un listeau télescopique (21) maintenu de manière à coulisser sur le listeau de pression (20) par l'intermédiaire d'éléments de serrage (22),
en ce que les listeaux télescopiques (21) sont maintenus de manière à pouvoir coulisser dans des rainures (24) des listeaux longitudinaux (7, 8) par l'intermédiaire de verrous (25),
en ce que les listeaux de pression (20) peuvent être coulissés sur des pièces d'encadrement longitudinales (3, 4) opposées du cadre externe (1), et
en ce que pour les listeaux longitudinaux (7, 8) et les listeaux transversaux (9, 10) sont prévus deux entraînements à broches (17) connectés par une chaîne (18, 19) pourvus de broches (13-16) ayant un pas gauche et un pas droit (13-16).

2. Cadre de fixation suivant la revendication 1, caractérisé en ce que les broches sont disposées aux extrémités des listeaux longitudinaux (7, 8) et des listeaux transversaux (9, 10) et en ce qu'un servo-moteur (11, 12) est prévu pour chaque paire de broches (13, 14; 15, 16).

3. Cadre de fixation suivant la revendication 1 ou 2, caractérisé en ce que les broches (15, 16) des listeaux transversaux (9, 10) s'engrènent dans des écrous filetés (28) disposés sur les listeaux de pression (20).

4. Cadre de fixation suivant l'une ou l'autre des revendications ci-dessus, caractérisé en ce que les broches (13-16) présentent un filet trapézoïdal.

5. Cadre de fixation suivant l'une ou l'autre des revendications ci-dessus, caractérisé en ce que pour le réglage de la grandeur d'encadrement du cadre interne (2) sont prévus un transducteur de position et une mémoire de données destinés à régler et à sélectionner différentes grandeurs du cadre interne (2).
